# EUROPEAN PATENT APPLICATION

(11) **EP 4 576 019 A1**
(43) Date of publication of application: **25.06.2025**
(21) Application number: 23219477.9
(22) Date of filing: 21.12.2023
(51) Int. Cl.: G06V 20/40

(54) **METHOD AND SYSTEM FOR IDENTIFYING A VIDEO CONTENT**

(71) Applicant: Nagravision Sàrl, 1033 Cheseaux-sur-Lausanne (CH)
(72) Inventor: SARDA, Pierre, 1033 Cheseaux-sur-Lausanne (CH)
(74) Representative: Novagraaf International SA

(57) **Abstract**

The method comprises the steps of a. obtaining a portion of the video content to be identified; b. extracting a frame from the video portion; c. detecting if the frame includes at least one human face; d1. in a negative event, executing the steps b. and c. on at least one other frame; d2. in a positive event, determining if the at least one human face can be identified and, if so, updating a query list including at least one identification information of human face detected in the video content to be identified; e. comparing the query list with at least one predetermined reference list of a known video content, stored in a database; f. determining if an identification result can be finalized at least based on the comparison; g1. in a positive event, outputting the identification result; g2. in a negative event, executing the steps b. to f. on at least one other frame of the video portion, in an iterative manner.

## Description

### TECHNICAL FIELD

The present disclosure relates to a method and a system for identifying a video content. Such a method can be used for example to detect a pirate version of a video content.

### BACKGROUND

Providers of video content streaming or broadcasting services have to deal with major problems of piracy. Pirate organizations provide illegitimate services of video content distribution. The legitimate content providers need to implement a content protection strategy, whether for live sport events, linear TV, video on-demand, ..., which requires effort.

A key aspect of content protection lies in the acquisition of evidence that the content has been or is being illicitly streamed. For that purpose, a monitoring strategy can be performed by an anti-piracy service to detect pirate streams, for example for live sport events, video-on-demand, TV programs, etc... For monitoring a live sport event or video-on-demand, many content streams are acquired and analyzed to determine if they genuinely correspond to the monitored content. Such an analysis can rely on an automatic content recognition (ACR) method.

A known automatic content recognition method is based on a fingerprinting technique. For that purpose, the legitimate content data is mapped to a short bit string, termed as a fingerprint, that uniquely identifies the original content data. Fingerprinting can be used to compare captured content data with legitimate content data from a monitored video-on-demand, in order to determine if it is a pirate stream or not.

The automatic content recognition can also use metadata associated with the legitimate content.

The automatic content recognition methods based on fingerprinting and/or metadata are very efficient. However, they require that the content service providers give access to their original contents to generate reference fingerprints. The original contents may not be easily available to third parties. In practice, the content service providers are reluctant to give access to their original contents, for security or cost reasons, so it may be impossible to use ACR in some conditions.

Moreover, a significant challenge arises when a large number of content streams are captured and need to be quickly processed by the anti-piracy service, for example during a live sport event. The anti-piracy system must determine as quickly as possible if the captured content stream is a pirate stream or not.

Accordingly, there is a need to improve the situation, in particular to speed up the process of video content identification or recognition.

### SUMMARY

The present disclosure concerns a computer-implemented method for identifying a video content, comprising the steps of:
a. obtaining a portion of the video content to be identified;
b. extracting a frame from the video portion;
c. detecting if the frame includes at least one human face;
d1. in a negative event, executing the steps b. and c. on at least one other frame of the video portion;
d2. in a positive event, determining if the at least one human face can be identified and, if so, updating a query list including at least one identification information of human face detected in the video content to be identified;
e. comparing the query list with at least one predetermined reference list in a database, including identification information of human faces appearing in a known video content to determine if a matching criterion is satisfied by the at least one predetermined reference list;
f. determining if an identification result can be finalized at least based on the comparison;
g1. in a positive event, outputting the identification result;
g2. in a negative event, executing the steps b. to f. on at least one other frame of the video portion, in an iterative manner.

According to the present invention, the method of identifying a video content is carried out based on one or more image frames that are successively extracted from a video portion of the video content that is potentially be a pirated content. For each extracted frame, an identification process is performed: one or more human faces can be detected and identified and a query list including identification information of these human faces is updated. Then, it is checked if the query list matches at least one reference list of a known video content in a database. Based on this comparison, it is determined if an identification result can be finalized. A final identification result may be that the video content to be identified corresponds to the known video content from the database, or that it is not the known video content from the database. A final identification result can be obtained after extraction of only one frame or a few frames, which allows to achieve the identification of many contents very quickly.

Advantageously, the method further comprises a step of detecting a change of scene between two frames successively extracted.

The detection of a change of scene between two frames allows to increase the probability of detecting new human faces in the next extracted frame. This allows to speed up the identification process and improve its efficiency.

In an embodiment, the duration of the video portion can be set to a predetermined value.

Advantageously, if no predetermined reference list in the database satisfies the matching criterion after executing the steps b. to e. on all the frames extracted from the video portion, outputting the identification result that the video content to be identified does not correspond to the at least one known video content from the database.

A video portion lasting for example between 1 seconds and 5 minutes, preferably between 5 seconds and 1 minute, preferably between 10 seconds and 30 seconds, allows to achieve a reliable identification of the video content with a very high probability. If it has been determined based on all the frames extracted from the video portion that the query list does not match the at least one reference list from the database, the identification result can be finalized with a good reliability and the final identification result that the video content to be identified is not or does not correspond to the known video content(s) from the database can be outputted.

In an embodiment, the method can further comprise:
a step of extracting additional information from the video portion by performing an image processing operation such as Optical Character Recognition; and
a step of comparing the extracted additional information with metadata stored in the database in association with the at least one predetermined reference list.

The additional information can speed up the identification and/or improve the reliability of the video content identification.

In an embodiment, the method can further comprise, in the step f., determining that the identification result cannot be finalized if a number of predetermined reference lists satisfying the matching criterion is above a first predetermined threshold value, preferably above one.

In an embodiment, the matching criterion can include a number of same human faces identified in both the query list and the predetermined reference list, that is above a predetermined threshold value.

In another embodiment, the matching criterion can include a first number of same human faces identified in both the query list and a first part of the reference list, and a second number of same human faces identified in both the query list and a second part of the reference list, that are both above a predetermined threshold value.

In an embodiment, the database is a generic database of information related to known video contents such as films, series, TV programs or shows, and online streaming video contents.

In another embodiment, the database contains a predetermined reference list of a known video content that is currently being distributed, such as a sport event, and the step a. is performed on a video content to be identified that is being transmitted concomitantly to the distribution of said known video content.

In another embodiment, the method comprises a step of generating the predetermined reference list of at least one known video content from the database during broadcast of said at least one known video content.

Advantageously, the step f. further comprises:
a step of determining a broadcast time information of the video content to be identified;
a step of determining a set of one or more known video contents broadcast at the same time as the video to be identified, based on the broadcast time information.

The present disclosure also concerns:
- a system comprising means adapted to carry out the steps of the method previously defined and having access to or comprising a reference database, said reference database storing at least one predetermined reference list including identification information of human faces appearing in a known video content;
- a computer program comprising instructions which, when the program is executed by a computer, cause the computer to carry out the method previously defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 schematically shows a system for identifying a video content, according to an embodiment.
Figure 2 shows a flow chart of a method for identifying a video content, according to a first embodiment.
Figure 3 shows a flow chart of a method for identifying a video content, according to a second embodiment.
Figure 4 shows a flow chart of a method for identifying a video content, according to a third embodiment.
Figure 5 shows a flow chart of a process for comparing a query list with reference lists, according to the third embodiment.

### DETAILED DESCRIPTION

The following detailed description describes various features and functions of the disclosed systems and methods with reference to the accompanying figures. In the figures, similar symbols identify similar components, unless context dictates otherwise. The illustrative system, device and method embodiments described herein are not meant to be limiting. It may be readily understood by those skilled in the art that certain aspects of the disclosed systems, devices and methods can be arranged and combined in a wide variety of different configurations, all of which are contemplated herein.

The present disclosure concerns a computer-implemented method and a system for identifying a video content, that can be used to detect pirate data streams, or more generally video contents that are illicitly distributed to users or user devices.

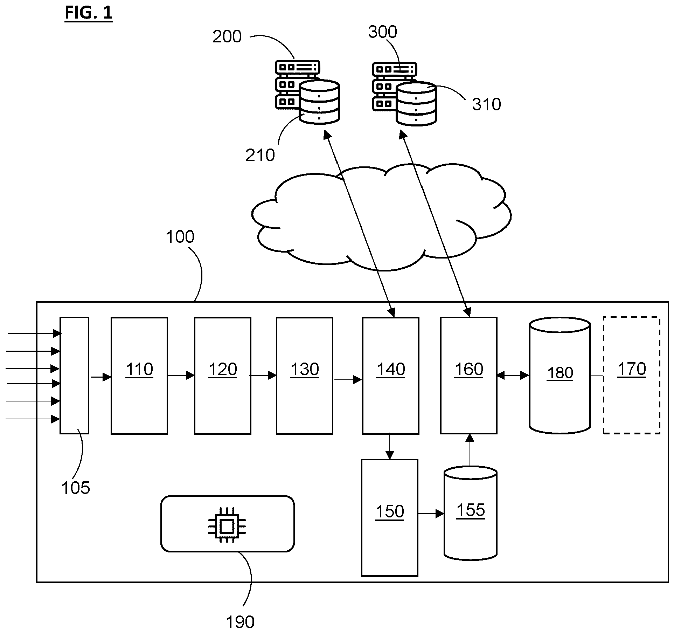

Figure 1 schematically represents a system 100 for identifying a video content, according to an embodiment.

The system 100 includes different components or elements:
- a reception device 105,
- a capture module 110,
- a frame extractor 120,
- a human face detector 130,
- a facial recognition module 140,
- a query list generator 150, and
- a video recognition module 160.

Furthermore, the system 100 can include and/or have access to one or more databases 180, 310, also termed as reference databases.

The system 100 further comprises one or more processors or control processing unit(s) 190, to which the other elements of the system 100 are connected and configured to control the operations of the system.

The system 100 is implemented with hardware means and software means. Each component or element of the system, described below, can be implemented with hardware and/or software.

The reception device 105 includes one or more receivers 105 that are configured to receive digital video contents through one or more communication networks, that can be of different types, such as the Internet, TV satellite network(s), Over-the-Air (OTA) Broadcasting network(s), CDN(s) (Content Delivery Network), mobile networks, etc...

The capture module 110 has the function of acquiring or capturing a video portion of a video content X to be identified, received through the reception module 105. The video portion can include a predetermined duration of the video content to be identified.

This predetermined duration, or capture duration or capture time, can be experimentally determined so as to achieve a correct determination whether the video content to be identified corresponds to a known video content or does not correspond to a known video content, based on the captured video portion, with a high probability, for example higher than 90%. The video portion duration may be a trade-off between efficiency and quickness of the automatic video recognition process. For example, the duration of the video portion can be comprised between 1 second and 5 minutes, preferably between 5 seconds and 1 minute, preferably between 10 seconds and 30 seconds, for example 20 seconds.

The frame extractor 120 is configured to extract one or more frames, referred as image frames IFₙ with n=1, 2, ..., from a video portion provided by the capture module 110.

In an embodiment, the frame extractor 120 includes a detector for detecting a change of scene between the image frames successively extracted. The role of the detector is to detect a change of scene between two image frames successively extracted. A change of scene can be detected by different known techniques. A known technique relies on computing an absolute pixel-wise difference between consecutive frames. If the difference exceeds a predefined threshold, a scene change is detected. Another known technique is based on a comparison of histograms of the pixel values in consecutive frames. A video content can be divided into shots, which are continuous sequences of frames from a single camera. A boundary detection algorithm can also be used to detect changes between shots, such as cuts, fades, wipes, and dissolves. Any other technique for detecting a change of scene in a video content or portion can be used. A combination of multiple techniques can also be used to improve detection performance.

The human face detector 130 has the function of detecting faces in image frames provided by the frame extractor 120. The human face detector 130 can use any face detection system and/or software, or any object detection system and/or software used for face detection.

Alternatively, or additionally, the human face detector 130 may be configured to communicate with an external service provider 200 (i.e., external to the system 100), for example Amazon^{®}, providing a service like "Amazon Rekognition^{®}" that can detect human faces in an image and perform the task of face detection in an image.

The facial recognition module 140 has the role of recognizing or identifying a human face detected by the human face detector 130. In an embodiment, the facial recognition module 140 is configured to receive as input an image frame that may include one or more human faces and provide as output identification information of the human faces detected in the image frame.

In an embodiment, the facial recognition module 140 may use an external service provider 200, for example Amazon^{®}, providing a service like "Amazon Rekognition^{®}" that can recognize and compare faces to identify known individuals or characters based on a large database 210 containing human face image data associated with identity data (e.g., names) of known individuals or characters (e.g., celebrities, players, actors, ...). Any other service of facial recognition could be used.

Alternatively, the facial recognition module 140 could perform the task of facial recognition using a local or internal database including identification information of known individuals or characters associated with face data.

The query list generator 150 is configured to generate or build a query list "QLx" for each video content X to be identified. The query list QLx associated with a video content X to be identified includes the identification information of each human face detected and recognized in the video content X, more precisely in one or more image frames extracted from the video content X. For example, the identification information can include identity data such as person's name(s) (e.g., person's first and last name). The query list QLx can be a list of names identifying individuals or characters. The query list generator 150 can be configured to create and update the query list QL_{X} associated with the video content X to be identified, to progressively build or create it, based on one or more frames successively extracted from the video portion of the video content X to be identified.

In a particular embodiment, the system 100 may include a local or internal reference database 180, and/or have access to a remote or external reference database 310.

A reference database includes at least one predetermined reference list "RL_{Y}" including identification information or identity data (e.g., names) of character or individual human faces appearing in a known video content Y. A known video content Y can be a movie, a TV show and/or program, a series, a VOD (video on demand) content, a documentary, an online streaming video content, a live sport event, or any other type of video content and/or entertainment. In an embodiment, the reference database can reference a plurality of known video contents Y1, Y2, ... and include, for each referenced known video content, a predetermined reference list RL_{Y1}, RL_{Y2}, ... including identification information (e.g., names) of character or individual human faces appearing in said known video content Y1, Y2, ...

The external database 310 can be an online database. The online database can be managed by and/or accessed through a service provider 310.

In an embodiment, the remote reference database 310 is an online database providing information about video contents such as movies, TV shows and/or programs, series, videos on demand, online streaming video contents ... The online database 310 can be accessed through a service provider 300, for example IMDb^{®} (Internet Movie Database). It contains, for each video content referenced in the database 310, predetermined identification information or identity data, such as names of the characters or individuals appearing in the video content. Thus, in the database 310, each video content is associated with a predetermined reference list including identification information of humans faces appearing in the video content. Such a reference database can be termed as a generic database as it provides information on many different video contents.

Another reference database can be an online database providing information about live sport events, or more generally about live events, including identification information or identity data, such as names, of characters or individuals appearing in the live sport event (e.g., sport team members and/or players). The information about a live event can optionally include timing information of the live event. Such an online database can also be managed by and/or accessed through a service provider.

In an embodiment, the internal reference database 180 can be similar to any of the online databases previously described, and can thus contain information about movies, TV programs, series, videos on demand, online streaming video contents, ... and/or live events such as live sport events.

The video recognition module 160 has the role of automatically recognizing or identifying a video content X to be identified based on a corresponding query list QLx and using a reference database 180 or 310. The video recognition module 160 is configured to achieve a comparison between the query list QL_{X} of the video content X to be identified with one or more predetermined reference list RL_{Y} related to one or more known video contents Y, stored in a reference database, to determine if a matching criterion is satisfied by at least one predetermined reference list, and determine if an identification result can be finalized at least based on this comparison.

If an identification result can be finalized, the final identification result may be for example that:
- the video content X corresponds to one known video content Y from the reference database; or
- the video content X does not correspond to the known video content Y or to any of the known contents from the reference database.

The operation of the video recognition module 160 will be described later in more detail in the description of the method according to different embodiments.

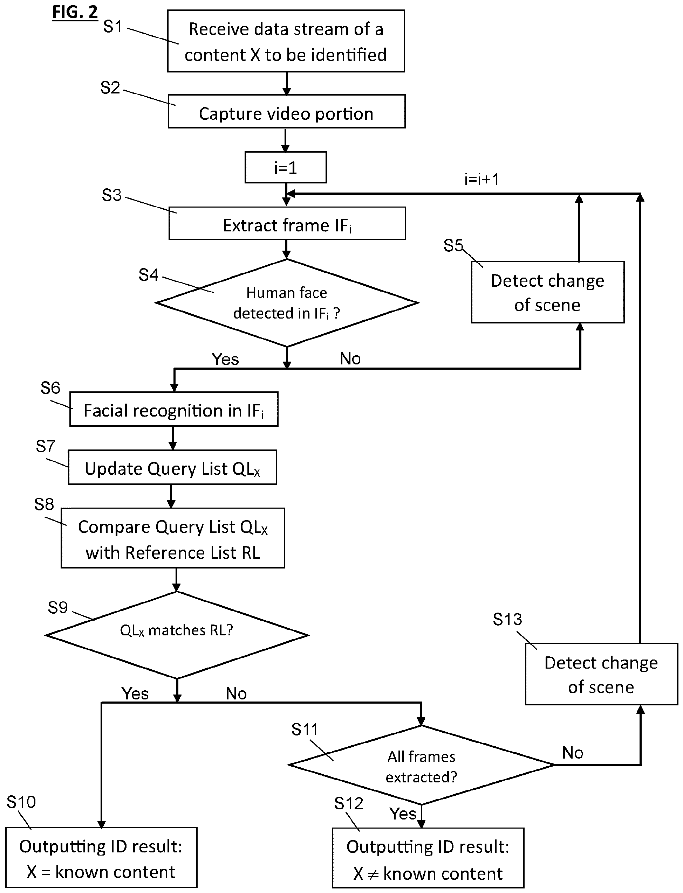

The method for identifying a video content, performed by the system 100, will now be described according to different embodiments, in reference to figures 2 to 5.

A purpose of the present method is to determine if a video content X to be identified corresponds to a known video content or does not correspond to a known video content. The method can be used to determine or detect if the video content X to be identified is a pirate video content or not.

### Embodiment 1

In Embodiment 1, the present method is used to monitor a known video content, such as a live event (e.g., a live sport event), that is being transmitted or distributed to users over one or more networks. The method allows to analyze, identify video contents that are transmitted to users concomitantly to the transmission of the known video content (e.g., a live sport event) from a legitimate content provider. The video contents to be identified and/or the known video content may be transmitted by any method of video content distribution, for example by streaming or broadcasting, through any distribution network (e.g., Internet, TV satellite network, mobile network, CDN, ...).

In a step S1, the system 100 receives via the reception module 105 one or more digital video contents X to be identified, also termed as unknown digital video contents, transmitted through one or more communication networks, such as the Internet, OTA Broadcasting network(s), CDN(s) (Content Delivery Network), mobile network(s), ... In an embodiment, in the step S1, the reception module 105 may receive data streams of digital video contents to be identified. Each video content data stream includes a continuous flow of digital data that delivers a video content to a receiver 105 over a network.

The received digital video contents X to be identified may be received from one or more content providers, that are not the legitimate content provider of the monitored known video content and/or that may be suspected as illegitimate content providers.

The processing steps S2 to S13 described below can be performed for each video content X to be identified that is received through the reception module 105 in the step S1. These steps are described below only for one video content X to be identified but apply in the same manner to any video content to be identified received by the reception module 105.

In a step S2, the capture module 110 captures or obtains a portion, referred as a "video portion", of the video content X to be identified received in the step S1. The video portion has a fixed and predetermined duration ΔT within a range that can be between 5 seconds and 5 minutes, preferably between 5 seconds and 1 minute, preferably between 15 seconds and 30 seconds. The video portion can be captured at any time during the video content delivering.

The value of the video portion duration ΔT is determined for example experimentally in such a way that the probability of correct determination that the video content to be identified either corresponds to a known video content or does not correspond to a known video content, is high. For example, tests can be done with different values of video portion duration ΔT and different types of contents to determine a correspondence between relevant necessary capture times (i.e., values of video portion duration ΔT) and different types of content (football match, film, ...). For example, a video portion duration ΔT of 10 seconds may be sufficient and relevant to determine that the video content to be identified corresponds to the monitored football match or does not correspond to said football match.

In a step S3, the frame extractor 120 extracts an image frame IFᵢ from the video portion of the video content X to be identified.

Initially, the index i can be set to 1 and a first frame IF₁ is extracted from the video portion. The first frame IF₁ may be the first frame of the video portion, or a frame extracted at the beginning of the video portion, for example within the first second of the video portion.

In a step S4, the human face detector 130 performs a task of human face detection in the image frame IFᵢ extracted in the step S3, to detect if the extracted frame IFᵢ includes at least one or more human faces.

In a negative event, i.e., if the extracted frame IFᵢ does not include any human face, the method goes back to the step S3 of extracting a frame from the video portion to extract another or subsequent or next image frame IFᵢ₊₁, different from the frame IFᵢ previously extracted, from the video portion.

In an embodiment, the method comprises a step S5 of detecting a change of scene between the two frames IFᵢ and IFᵢ₊₁ successively extracted. The step S5 may be executed after the step S4 and before the step S3 of extracting the next image frame IFᵢ₊₁.

In a positive event, i.e., if the extracted frame IFᵢ includes one or more detected human faces, the method goes to a step S6.

In the step S6, a facial recognition of the human faces detected in the image frame IFᵢ is performed. In an embodiment, the facial recognition S6 can be performed by the facial recognition module 140 by means of the remote service provider 200. More precisely, the facial recognition module 140 can transmit the image frame IFᵢ to the service provider 200 with a request for facial recognition. The service provider 200 can perform the task of facial recognition in the received image frame IFᵢ using its database 210. Then, the service provider 200 transmits to the facial recognition module 140 the identification information or identity data (e.g., the name(s)) of the human faces detected and recognized in the image frame IFᵢ.

Alternatively, or additionally, the system 100 may include or have access to a local database containing facial image data associated with identity data (e.g., names) of known characters or individuals (for example celebrities, famous sportspeople, actors, ...). In that case, the facial recognition module 140 may entirely carry out the task of facial recognition itself.

The facial recognition module 140 preferably only transmits the image frame(s) including one or more human faces to the service provider 200. This allows to reduce the use of bandwidth and external resources such as the service provider 200.

In the step S6, if one or more human faces has been detected and recognized in the image frame IFᵢ, the facial recognition module 140 transmits the identification information or identity data (e.g., name(s)) of said one or more human faces to the query list generator 150.

In a step S7, the query list generator 150 creates or updates a query list QL_{X} associated with the video content X to be identified by adding the identification information or identity data, such as the names, of the one or more human faces detected and recognized in the image frame IFᵢ in this query list QL_{X} The query list QL_{X} may be initially empty, and then updated by progressively adding to the query list QL_{X} identification information of human faces as the step S7 is executed in an iterative manner, as described later.

Then, the method goes to a step S8 performed by the video recognition module 160. In the step S8, the query list QLx is compared with one or more predetermined reference list(s), associated with respective known video content(s) and stored in a reference database (e.g., the local database 180 or the remote database 310). Each predetermined reference list associated with one known video content includes identification information or identity data (e.g., names) of human faces appearing in said known video content. The query list QL_{X} is compared with the predetermined reference list(s) from the reference database to determine if a predetermined matching criterion is satisfied by one or more reference list(s). Based on the comparison of the query list QL_{X} with the reference list(s), a number N of known video content(s) satisfying the predetermined matching criterion, with N≥0, can be determined. This matching criterion is a criterion that must be satisfied to establish or determine that the video content X to be identified matches (or corresponds to) a known video content.

In Embodiment 1, the method for identifying digital video contents may be carried out to monitor a live event, such as a live sport event that is broadcast and/or streamed through one or more networks. As an illustrative and non-limitative example, the live sport event can be a football match. The present method can be performed in real time or near real time when the live sport event is being transmitted in order to detect pirate data streams.

In Embodiment 1, the system 100 may include a reference database 180 including a predetermined reference list RL including the identification information or identity data, for example the names, of the characters like athletes participating in the live sport event (e.g., the football players). This reference list may be predetermined and stored in the reference database 180 prior to the live sport event, based on information about the live sport event for example available online and/or on the Internet.

In Embodiment 1, in the step S8, the video recognition module 160 can compare the query list QL_{X} with the predetermined reference list RL in the reference database 180 to determine if the matching criterion is satisfied.

For example, the matching criterion may be that the number of same human faces (i.e., human faces of a same person or character) that are identified in both the query list QL_{X} and the reference list RL is above a predetermined threshold value TSH₀. In other words, the predetermined matching criterion may be that the query list QL_{X} and the reference list RL both contain at least a number TSH₀ of identical or common character names (or identification information items). For example, TSH₀ may be equal to 2 or more.

In another example, the live sport event involves two teams of athletes, referred as a first team and a second team, and the predetermined reference list RL is divided into a first RL part and a second RL part respectively corresponding to the first team and the second team. The first RL part includes the identification information, such as the names, of the athletes in the first team, while the second RL part of the reference list RL includes the identification information, such as the names, of the athletes in the second team. The matching criterion may be that a first number of human faces identified in both the query list and the first RL part of the reference list, and a second number of human faces identified in both the query list and the second RL part of the reference list, are both above a predetermined threshold TSH₁. In other words, it is determined that the video content X to be identified matches the live sport event that is monitored if the query list QLx includes the identification information, such as the names, of at least TSH₁ individuals (here, athletes) from each of the two teams participating in the live sport event. For example, TSH₁ could be equal to 1 or 2. But TSH₁ may be set to another value above 2.

In Embodiment 1, based on the comparison S8 between the query list QL_{X} and the reference list RL with the matching criterion, it may be determined in the step S9 if the query list QL_{X} matches or does not match the reference list RL of the live sport event.

If the query list QL_{X} matches the reference list RL according to the matching criterion in the step S9 (branch: Yes), the method goes to a step S10 of determining that an identification result can be finalized and outputting the final identification result that the video content X to be identified corresponds to or is the known content, here the live sport event.

If the query list QL_{X} does not match the reference list RL according to the matching criterion (i.e., N=0), the method goes to a step S11 of determining if all the image frames have been extracted from the video portion (i.e., if the video portion has been totally analyzed) or if another image frame can be extracted from the video portion.

If not all the image frames have been extracted from the video portion (branch No after step S11), the method goes back to the step S3 to extract another frame IFᵢ₊₁ after detection of a change of scene in a step S13. The step S13 may be executed in the step S11 to determine if all the frames have been extracted from the video portion.

If all the image frames have been extracted from the video portion (branch Yes after step S11), the method goes to a step S12 of determining that an identification result can be finalized and outputting the final identification result that the video content X does not correspond to the known content, here the live sport event.

The steps S3 to S13 are carried out on one or more successive image frames IF₁, IF₂, ... in an iterative manner until a final identification result is determined and outputted either in the step S10 or in the step S12.

### Variant

In a variant of Embodiment 1, the system 100 may include a database storing exclusion data or list(s) including identification information of human faces that do not appear in the monitored known video content. For example, if the monitored known video content is a live sport event, at least one exclusion list may contain identification information (e.g., names) of athletes that do not participate in said live sport event. In an illustrative and non-limitative example, different exclusion lists may be respectively associated with different teams that do not participate in the monitored live sport event, each exclusion list associated with one team including the identification information of the athletes from said team.

In the variant, the query list QL_{X} of the video content X to be identified may be compared to the exclusion list(s) from the database. If it is determined that the query list QL_{X} of the video content X to be identified matches an exclusion list, according to a matching criterion, the identification result is finalized. The final identification result that the video content X to be identified does not correspond to the known video content that is monitored, here the live sport event, is outputted and the process is ended.

### Embodiment 2

Embodiment 2 is based on Embodiment 1, or its variant, and only differs from Embodiment 1, or its variant, by the features described below.

In Embodiment 2, the reference database 180 (or 310) may store metadata associated with each predetermined reference list stored in the reference database. For example, in case of a live sport event, the metadata associated with the reference list RL of the live sport event may include identification data, such as names and/or abbreviated names, of teams participating in the live sport event (e.g., "Liverpool" and/or "LIV") and/or result data indicating a sporting result of the live sport event, that is updated in real time or near real time in the database during the live sport event.

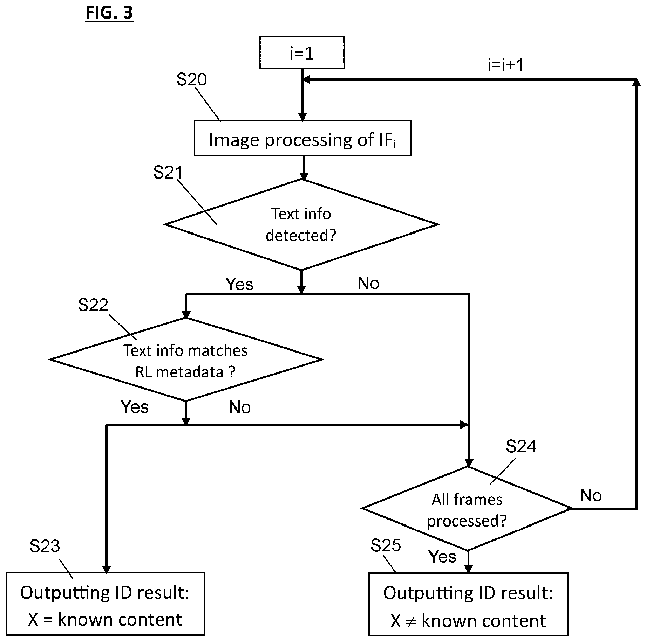

In Embodiment 2, the method can further include the step S20 to S25, described below, shown in figure 3. These steps can be carried out by the video recognition module 160.

In the step S20, image processing is performed on an extracted image frames IFᵢ to extract additional information from the video portion of the content X to be identified. The additional information is different from the information about human faces detected in the frames. The step S20 may be first performed on the first extracted frame IF₁.

The image processing may have the function of extracting text information from the extracted frames IFᵢ for example by performing Optical Character Recognition.

Additionally, or alternatively, the image processing may allow to extract graphical information and/or characters from the frames IFᵢ.

In a step S21, it is determined if text information has been detected in the image frame IFᵢ.

If text information is not detected in the image frame IFᵢ, the method goes to a step S24, described later.

If text information has been detected in the image frame IFᵢ, the method goes to a step S22 of comparing the text information to the metadata associated with the predetermined reference list RL and detecting if they match. Any matching criterion may be used for the comparison. For example, a matching criterion may be that the detected text information includes names or abbreviated names that match the names or abbreviated names of the two teams participating in the live sport event. Another matching criterion may be that the text information includes numbers that match the current sporting result of the live sport event.

If the text information matches the metadata associated with the predetermined reference list in the reference database 180, the method goes to a step S23 of determining and outputting the identification result that the content X to be identified corresponds to or is the known video content that is monitored, such as the live sport event.

If the text information does not match the metadata associated with the predetermined reference list, the method goes to the step S24. In the step S24, it is determined if all the extracted frames IFᵢ have been processed. If not, the method goes back to the step S20 of image processing to process another or subsequent or next extracted image frame IFᵢ₊₁ from the video portion. If all the frames IF₁, IF₂, ... extracted from the video portion have been processed, the method goes to a step S25 (or S12) of determining and outputting the identification result that the video content X to be identified does not correspond or is not the known video content.

The steps S20 to S25 may be performed after extracting all the frames from the video portion and determining that the query list QLx does not match any predetermined reference list of a known content stored in the reference database (branch Yes after step S11 in figure 2).

For example, the steps S20 to S25 can be performed if, in step S9, it is determined that the matching criterion is partially satisfied by the predetermined reference list RL of a known video content. In that case, the additional information (e.g., text information) detected in the image frames IF₁, IF₂, ... can be compared to the metadata associated with this predetermined reference list RL of the known video content that partially matches the query list QL_{X} of the content X to be identified, to determine if the content X to be identified corresponds to the known video content.

Alternatively, the steps S20 to S25 may be performed in parallel with the steps S3 to S13, each time an image frame IFᵢ is extracted from the video portion of the content X to be identified.

### Embodiment 3

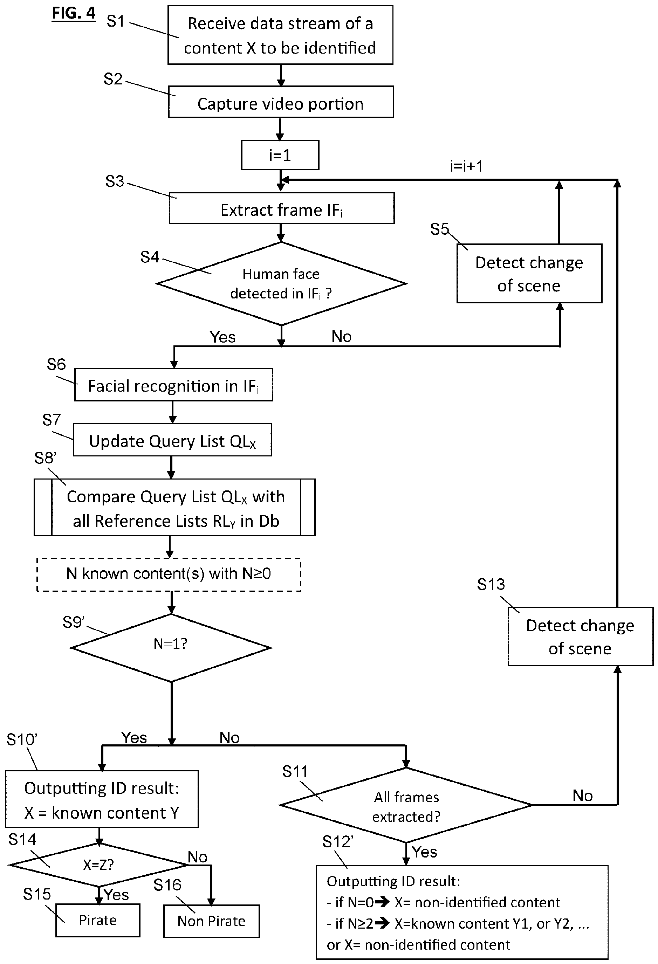

Embodiment 3 is based on any of Embodiment 1 or 2 and their variants, and only differs from it by the features described below and will be described with reference to figure 4.

In Embodiment 3, the method and system 100 for identifying a video content are used to monitor one or more known video contents Z, such as films, series, documentaries, ..., that can be transmitted or distributed by legitimate content provider(s) to users over one or more networks. For example, the known video contents Z can be owned and/or provided by a legitimate content provider (e.g., a content platform such as Netflix^{®}, a TV chain, ...) having rights, for example exclusive rights, for distributing these known video contents to authorized users. The purpose of the method is to detect or identify pirate video contents that may be illicitly transmitted to users by illegitimate content providers that do not have the appropriate rights for distributing them. The video contents to be identified may be transmitted by any method of content distribution, for example by streaming or broadcasting, and through any distribution network (e.g., Internet, TV satellite network, mobile network, CDN, ...).

The system 100 according to Embodiment 3 has access to the remote reference database 310 that may be a generic database of information related to various types of known video contents Y such as films, series, TV programs, online streaming video contents, .... For example, the reference database 310 can be the IMDb^{®} database. The reference database 310 can be an online database. Alternatively, the reference database could be an internal and/or local database of the system 100.

The reference database 310 can include, for each known video content Y referenced in the database 310, a predetermined reference list RL_{Y} including identification information or identity data, for example names, of characters appearing in this known video content Y.

The method according to Embodiment 3 can comprise the steps S1 to S7 previously described with reference to figure 2, as shown in figure 4.

In Embodiment 3, after the step S7 of updating the query list QL_{X}, the method goes to a step S8' of comparing the query list QLx of the content X to be identified with the predetermined reference lists RL_{Y} of known contents Y from the reference database 310.

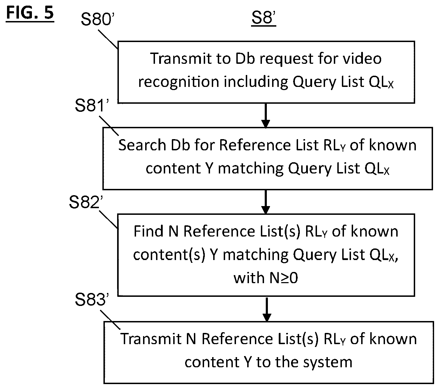

In Embodiment 3, with reference to figure 5, the step S8' can comprise a step S80' of transmitting a request for video recognition including the query list QL_{X} from the system 100 to the service provider 300. The request can be transmitted by the video recognition module 160. Upon reception of the request by the service provider 300, a search engine can search the reference database 310 for a predetermined reference list RL_{Y} that matches the query list QL_{X} of the content X to be identified according to a matching criterion, in a step S81'. For example, the matching criterion may be that the predetermined reference list RL_{Y} contains the query list QL_{X} or, alternatively, contains at least part of the query list QL_{X} A number N of predetermined reference list(s) RL_{Y}, with N≥0, matching the query list QL_{X} can be found in the reference database 310, in a step S82'. Then, the search engine can provide a search result specifying or identifying the N known content(s) Y corresponding to the N predetermined reference list(s) RL_{Y} found in the reference database 310 (i.e., the N predetermined reference list(s) RL_{Y} matching the query list QL_{X}), and the service provider 300 can transmit this search result to the video recognition module 160 of the system 100, in a step S83'.

In the next step S9', it may be determined if the query list QL_{X} of the content X to be identified matches only one predetermined reference list from the database 310 (i.e., N=1).

In a positive event (branch Yes after step S9'), it is determined that an identification result can be finalized based on the comparison performed in the step S8', and the video recognition module 160 outputs the identification result that the content X to be identified corresponds to or is the known content Y which predetermined reference list matches the query list QL_{X}.

In a negative event (branch No after step S9'), the method goes to the step S11 of determining if all the image frames have been extracted from the video portion (i.e., if the video portion has been totally analyzed).

If not all the image frames have been extracted from the video portion (branch No after step S11), the method goes back to the step S3 to extract another frame IFᵢ₊₁ after detection of a change of scene in a step S13.

If all the image frames have been extracted from the video portion (branch Yes after step S11), the method can go to a step S12' of determining that an identification result can be finalized and outputting the final identification result based on the number N of matching reference list(s), for example as follows:
- if N=0 (no matching or hit has been found in the reference database), the identification result is that the video to be identified X is an unknown or non-identified video content;
- if N≥2 (more than one matching or hit have been found in the reference database 310), the identification result may specify or identify the N known contents Y which predetermined reference lists match the query list QL_{X}

Alternatively, in the step S12', if N≥2 (i.e., more than one matching or hit have been found in the reference database 310), the identification result may be that the video to be identified X is an unknown or non-identified video content.

The method can go to a step S14 of determining if the video content X that has been identified in the step S10' corresponds to one of the monitored video contents Z to determine if the video content X is a pirate video content or not. In a positive event, the system 100 can determine that the video content X is a pirate video content (step S15). In a negative event, the system 100 can determine that the video content X is not a pirate video content (step S16).

### Variant

In a variant of Embodiment 3, the method can further include a step of determining a broadcast or distribution time information of the video content X to be identified;
a step of determining a set of one or more broadcast video contents concomitant to the broadcast time information of the video to be identified, based on broadcast programming data ; and
a step of filtering the N known video contents retrieved from the database with said set of one or more broadcast video contents in order to determine the identification result.

### Embodiment 4

Embodiment 4 can be based on Embodiment 1 or 2, or their variants, and only differs from it by the features described below.

In Embodiment 4, the system 100 may include a reference list generator 170 having the function of generating a reference list. The reference list generator 170 may be configured to generate a reference list of a known video content such as a TV program, TV show, live event, ..., during distribution of this known video content to users or user devices. This known video content may be received by the system 100 through the reception module 105.

The method for identifying a video content according to Embodiment 4 can be used to monitor at least one known video content Z, such as a TV program, a TV show, ..., that is currently being distributed to users over one or more networks.

The method according to Embodiment 4 includes a step, performed by the generator 170, of generating the predetermined reference list of the known video content Z that is monitored, during distribution or broadcast or streaming of said known video content Z to users.

When the known video content such as a TV show is distributed to users, the system 100 may receive the TV show, extract image frames from it, detect human faces in the extracted image frames, and identify the detected human faces, in an analogous manner as previously described. The system may generate the predetermined reference list of the TV show based on the identification information of the human faces detected and identified in the image frames of the TV show.

The method according to Embodiment 4 can further include the steps S1 to S13 according to Embodiment 1 but using a reference database 180 that contains the predetermined reference list generated by the generator 170. The method according to Embodiment 4 can optionally further include the steps S20 to S25 according to Embodiment 3.

The method can be performed during the TV show (or distribution of the monitored video content Z), or after.

### Embodiment 5

Embodiment 5 can be based on any of Embodiments 1 to 4 and their variants.

In Embodiment 5, the method can further include a step of determining, by the system 100, a broadcast or distribution time information of the video content X to be identified.

The determined broadcast time information can be used to determine a set of one or more known video contents that is or has been broadcast at the same time as the video content X to be identified. The determination of this set of known video content(s) broadcast at the same time as the content X to be identified may be determined by comparing the broadcast time information of the content X with metadata associated with the known video contents, including broadcast time information of said known video contents, or with content broadcast programming data.

The set of one or more known video contents broadcast at the same time as the video content to be identified may be used to finalize an identification result and/or to determine if the content to be identified is a pirate video content.

For example, if it has been determined that the content X to be identified corresponds to a known content Y, and that this known content Y is part of the set of one or more known contents broadcast at the same time, it may be determined that the content X to be identified is a pirate video content.

Alternatively, or additionally, if it has been determined that the content X to be identified may correspond to two or more known contents, it may be determined if one of them is part of the set of one or more known contents broadcast at the same time, to determine that the content X to be identified corresponds to this one known content.

The broadcast time information of the content to be identified may also be used to analyze video contents X to be identified after broadcast of the known video content that is monitored, for example after a live sport event or a TV show.

### FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. A computer-implemented method for identifying a video content, comprising the steps of:
a. obtaining (S1, S2) a portion of the video content to be identified;
b. extracting (S3) a frame from the video portion;
c. detecting (S4) if the frame includes at least one human face;
d1. in a negative event, executing the steps b. (S3) and c. (S4) on at least one other frame of the video portion;
d2. in a positive event, determining (S6) if the at least one human face can be identified and, if so, updating (S7) a query list including at least one identification information of human face detected in the video content to be identified;
e. comparing (S8) the query list with at least one predetermined reference list in a database (180; 310), including identification information of human faces appearing in a known video content to determine if a matching criterion is satisfied by the at least one predetermined reference list;
f. determining (S9) if an identification result can be finalized at least based on the comparison;
g1. in a positive event, outputting (S10) the identification result;
g2. in a negative event, executing the steps b. to f. (S3-S4, S6-S9) on at least one other frame of the video portion, in an iterative manner.

2. The method according to claim 1, further comprising a step (S5, S13) of detecting a change of scene between two frames successively extracted.

3. The method according to any of claims 1 and 2, wherein
the duration of the video portion is set to a predetermined value.

4. The method according to claim 3, wherein
if no predetermined reference list in the database (180; 310) satisfies the matching criterion after executing the steps b. to e. on all the frames extracted from the video portion, outputting (S12) the identification result that the video content to be identified does not correspond to the at least one known video content from the database (180; 310).

5. The method according to any of claims 1 to 4, further comprises:
a step (S21) of extracting additional information from the video portion by performing an image processing operation (S20) such as Optical Character Recognition; and
a step (S22) of comparing the extracted additional information with metadata stored in the database (180; 310) in association with the at least one predetermined reference list.

6. The method according to any of claims 1 to 5, further comprising, in the step f. (S9), determining that the identification result cannot be finalized if a number of predetermined reference lists satisfying the matching criterion is above a first predetermined threshold value, preferably above one.

7. The method according to any of claims 1 to 6, wherein the matching criterion includes a number of same human faces identified in both the query list and the predetermined reference list, that is above a predetermined threshold value.

8. The method according to any of claims 1 to 6, wherein the matching criterion includes a first number of same human faces identified in both the query list and a first part of the reference list, and a second number of same human faces identified in both the query list and a second part of the reference list, that are both above a predetermined threshold value.

9. The method according to any of claims 1 to 8, wherein the database is a generic database (310) of information related to known video contents such as films, series, TV programs or shows, and online streaming video contents.

10. The method according to any of claims 1 to 8, wherein, the database (180) contains a predetermined reference list of a known video content that is currently being distributed, such as a sport event, and the step a. (S1, S2) is performed on a video content to be identified that is being transmitted concomitantly to the distribution of said known video content.

11. The method according to any of claims 1 to 8, comprising a step of generating the predetermined reference list of at least one known video content from the database during broadcast of said at least one known video content.

12. The method according to any of claims 1 to 11, wherein the step f. further comprises:
a step of determining a broadcast time information of the video content to be identified;
a step of determining a set of one or more known video contents broadcast at the same time as the video to be identified, based on the broadcast time information.

13. A system
comprising means adapted to carry out the steps of the method according to any of claims 1 to 12; and
having access to or comprising a reference database (180; 310), said reference database (180; 310) storing at least one predetermined reference list including identification information of human faces appearing in a known video content.

14. A computer program comprising instructions which, when the program is executed by a computer, cause the computer to carry out the method of any of claims 1 to 12.
